# EUROPÄISCHE PATENTANMELDUNG

(11) **EP 1 528 049 A1**
(43) Veröffentlichungstag der Anmeldung: **04.05.2005**
(21) Anmeldenummer: 04025471.6
(22) Anmeldetag: 27.10.2004
(51) Int. Cl.: C04B 35/573, C04B 38/00

(54) **Verfahren zur Herstellung eines Verbundkörpers aus Keramik**

(30) Priorität: 31.10.2003 DE 10351057
(71) Anmelder: Viessmann Werke GmbH & Co KG, 35107 Allendorf (DE)
(72) Erfinder: Greil, Peter, Prof. Dr., 91085 Weisendorf (DE); Sieber, Heino, Dr., 91052 Erlangen (DE); Weisensel, Lars, 91054 Erlangen (DE)
(74) Vertreter: Wolf, Günter, Dipl.-Ing.

(57) **Zusammenfassung**

Nach dem Stande der Technik wird bei einem Verfahren zur Herstellung eines Verbundkörpers aus Keramik oder faserverstärkter Keramik ein aus kohlenstoffreichem Material aufgebauter und Hohlräume aufweisender Formkörper gebildet, anschließend einer Pyrolyse sowie einer Silizierung unterzogen und bis zur Ausbildung von Siliziumcarbid gebrannt.

Nachteilig beim Stand der Technik ist die aufwändige Herstellung eines kohlenstoffreichen Fomkörpers.

Erfindungsgemäß wird als Ausgangsmaterial zur Herstellung des Formkörpers kommerziell hergestellte Wellpappe eingesetzt.

Obwohl Wellpappe eine vergleichsweise geringe Kohlenstoffkonzentration aufweist, gelingt mit dem erfindungsgemäßen Verfahren die Herstellung von qualitativ hochwertigen Siliziumkarbid-haltigen Verbundkörpern. Der Herstellungsprozess der Siliziumkarbid-Keramiken ist wesentlich kostengünstiger gestaltet.

## Beschreibung

Die Erfindung betrifft ein Verfahren zur Herstellung eines Verbundkörpers aus Keramik, bei dem ein kohlenstoffhaltiger und Hohlräume aufweisender Formkörper gebildet, anschließend einer Pyrolyse sowie einer Silizierung unterzogen und bis zur Ausbildung von Siliziumcarbid gebrannt wird. Die Erfindung betrifft ferner einen Siliziumkarbid-haltigen Verbundkörper.

SiC-basierende Materialien werden für eine Vielzahl von unterschiedlichen Anwendungen, insbesondere dort, wo hohe Festigkeiten bei hohen Temperaturen oder hohe Korrosionsbeständigkeiten gefordert werden, eingesetzt. Insbesondere hochporöse, und damit auch leichtgewichtige, SiC-basierende Keramiken werden im zunehmenden Maße als hochtemperaturfeste Materialien für Katalysatorträger, als Brennhilfsmittel, Isolationsmaterialien, als Substratmaterialien oder zur Gaserhitzung in Porenbrennern oder für Solaranlagen sowie zur Abgasreinigung bei hohen Temperaturen als Filtermaterialien benötigt.

In den vergangenen Jahrzehnten wurden mehrfach Verfahren beschrieben, die sich mit der Silizierung von Halbzeugformteilen unterschiedlicher Zusammensetzung von Kohlenstoff, SiC und Si befassen. Neben der Silizierung von C- und SiC-Fasergelegen unterschiedlicher Webart und unterschiedlichen Aufbaus wurde insbesondere die pulvertechnologische Route beschrieben. Die Silizierung von derartigen Halbzeugformteilen kann somit als etablierter Prozess zur Herstellung von SiSiC-Keramiken betrachtet werden (siehe zum Beispiel die den Anmeldungsunterlagen beigefügten Dokumente von P. Popper, "The preparation of dense self-bonded silicon carbide bodies", in "Special Ceramics", Heywood, London (1960) 209; W. B. Hillig, R.L. Mehan, C.R. Morelock, V.J. de Carlo, W. Laskow, "Silicon/silicon carbide composites", Am. Ceram. Soc. Bull. 54 (1975) 1054; E. Fitzer and R. Gadow, "Fiber-reinforced Silicon Carbide," Am. Cer. Soc. Bull. 65 (1986) 326).

Neben der Herstellung von dichten SiSiC-Keramiken wurden in den vergangenen Jahren ebenfalls unterschiedliche Verfahren zur Herstellung poröser SiSiC-Keramiken insbesondere über die pulvertechnologischen Route beschrieben (siehe zum Beispiel DE 197 27 115 A1 - Poröse SiC-Keramik und Verfahren zu ihrer Herstellung, DE 40 25 239 C1 - Verfahren zur Herstellung von Formkörpern aus Si-infiltrierten SiC, DE 37 19 606 C2 - Verfahren zur Silizierung von porösen Formkörpern aus SiC oder SiC/C, DE 694 29 323 T2 / EP 0 657 403 B1 - Poröses keramisches Material und Verfahren zu seiner Herstellung).

In den letzten Jahren wurden auch unterschiedliche Verfahren beschrieben, die sich auf die Silizierung von cellulosehaltigen Halbzeugmaterialien beziehen. Dazu wurden unterschiedliche Holzarten, oder Holzhalbzeuge, wie Holzspäne und Pflanzenfasern, aber auch Span- und Sperrholzplatten genutzt. Die bisher bekannten Verfahren zielen auf die Herstellung von dichten SiC-basierenden Keramiken ab.

US 6,124,028 A und US 6,051,096 A (Carbonized wood and materials formed therefrom) beschreiben ein Verfahren zur Herstellung von Kohlenstoffkörpern sowie von SiSiC- und SiC-Keramiken aus unterschiedlichen pyrolysierten Hölzern.

DE 198 23 507 A1 (Verfahren zur Herstellung von Formkörpern auf der Basis von Kohlenstoff, Carbiden und/oder Carbonitriden) beschreibt ein Verfahren zur Herstellung von Formkörpern aus Kohlenstoff, Carbiden und/oder Carbonitriden unter Verwendung von biogenen Rohstoffen. Als biogene Rohstoffe werden Faserverbunde in Form von Vliesen, Matten oder Geweben, also Langfaserverbunde aus Naturfasern, sowie großflächige dünnwandige Flächengebilde vorgeschlagen.

DE 101 61 108 A1 und WO 03/050058 A1 (Verfahren zur Herstellung eines Keramikbauteils) beschreiben ein Verfahren, dass unter Verwendung eines faser-, span- und/oder strandhaltigen cellulosehaltigen Halbzeuges homogener Dichteverteilung und homogener Struktur ein Kohlenstoff- bzw. Keramikbauteil herstellt. Als Halbzeugformteile dienen insbesondere plattenförmige Formteile mit homogener Dichteverteilung aus celluloseund/oder lignocellulosehaltigen Partikeln, hergestellt aus Holz oder Pflanzenfasern. Es sollen homogene großflächige Kohlenstoff- bzw. Keramikbauteile als Massenprodukte herstellbar sein, die weitgehend richtungsunabhängige mechanische und thermische Eigenschaften aufweisen.

DE 199 47 731 A1 (Bauteil aus SiC-Keramik und Verfahren zur Herstellung eines Bauteils aus SiC-Keramik) beschreibt ein Verfahren zur Herstellung eines Bauteils aus SiC-Keramik unter Verwendung eines Ausgangskörpers aus cellulosehaltigem Material und Bindemittel, das dadurch gekennzeichnet ist, dass der Ausgangskörper aus einem technischen Halbzeug besteht, das aus Bestandteilen in Form von Spänen und/oder einer oder mehreren Lagen aus zellulosehaltigen Material, verbunden mit pyrolysierbarem Bindemittel, hergestellt wird.

DE 100 20 655 A1 (Keramischer Werkstoff) beschreibt einen keramischen Werkstoff sowie ein Verfahren zu dessen Herstellung bei dem ein verkohlbarer Stoff verkokt und anschließend mit Si infiltriert wird. Unter verkokbaren Stoffen werden insbesondere Holz und Pflanzen sowie holzartige Produkte (z.B. Holzfaserplatten) beschrieben. Die Formgebung kann bei dem beschriebenen Verfahren nach der Pyrolyse oder nach der Silizierung erfolgen.

EP 1 219 578 A2 (Silicon/Silicon carbide composite and process for manufacturing the same) beschreibt ein Verfahren zur Herstellung von Formkörpern aus SiSiC-Keramik mit 45-75 Gew.-% Si und 25-55 Gew.-% SiC aus einer Anordnung von Cellulosefasern mit einer Dicke von 150 mm und einer Länge von 0.8 - 3.5 mm. Das Verfahren beschreibt die Herstellung von insbesondere dichten, hochreinen SiSiC-Materialien für eine Halbleiter-Temperaturbehandlung ohne auf die Formgebung derselben einzugehen.

Alle bisher beschriebenen Verfahren, die unterschiedliche cellulosehaltige Halbzeugmaterialien verwenden, benutzen eine Prozessführung, bei der die Halbzeugmaterialien in einem ersten Schritt in poröse Kohlenstoffkörper umgesetzt und in einem zweiten Schritt mittels einer Si-Schmelze siliziert werden. Nach der Silizierung entstanden nahezu dichte Bauteile aus SiSiC- oder SiSiC/C-Keramik. Die Verfahren dienen nicht der Herstellung von porösen SiC-basierenden Bauteilen mit einer definierten oder gerichteten Porenstruktur.

EP 0 151 213 A1 beschreibt dagegen ein Verfahren zur Herstellung eines reaktionsgesinterten Siliciumkarbidkörpers mit poröser Struktur. Dabei wird ein noch verformbarer, stark kohlenstoffhaltiger Vorkörper in die gewünschte Endform gebracht und nach einem an sich bekannten Verfahren unter Luftabschluss verkokt, sodass das Kohlenstoffgerüst zurückbleibt (Pyrolyse). Die carbonisierten Teile werden mit Silizium in Verbindung gebracht (Silizierung). Dabei wird Silizium durch Zersetzung abgeschieden und in einem weiteren thermischen Prozess zur Reaktion C + Si -> SiC gebracht. Zur Herstellung des Vorkörpers gemäß dem Verfahren nach der EP 0 151 213 A1 wird eine erste, glatte Folie aus einem hoch kohlenstoffhaltigen Werkstoff und eine zweite, profilierte Folie aus dem gleichen oder einem anderen hoch kohlenstoffhaltigen Werkstoff mit einem gleichfalls stark kohlenstoffhaltigen Kleber verbunden und in die gewünschte Endform gebracht. Demzufolge ist der so gefertigte Vorkörper durch einen insgesamt sehr hohen Kohlenstoffgehalt ausgezeichnet. Nachteilig bei diesem Verfahren ist jedoch die aufwändige Herstellung des Vorkörpers als vorbereitender Arbeitsschritt vor der Herstellung des eigentlichen Siliciumkarbidkörpers.

Aufgabe der Erfindung ist daher, ein Verfahren zur Herstellung von siliziumkarbidhaltigen Verbundkörpern zu schaffen, das kostengünstiger und einfacher durchzuführen ist.

Gelöst ist diese Aufgabe bei einem Verfahren nach dem Oberbegriff des Patentanspruchs 1 dadurch, dass als Ausgangsmaterial zur Herstellung des Formkörper Wellpappe zum Einsatz kommt.

Der Erfindung liegt die überraschende Erkenntnis zu Grunde, dass es zur Herstellung von siliziumkarbidhaltigen Verbundkörpern nicht erforderlich ist, einen speziellen Vorkörper aus hoch-kohlenstoffhaltigen Ausgangsstoffen herzustellen, sondern dass bereits kommerziell erhältliche Wellpappen, trotz ihres wesentlich geringeren Kohlenstoffgehalts geeignet sind, Siliziumkarbid - Keramiken mit für die Praxis hinreichend guten Eigenschaften herzustellen.

Als "Wellpappe" wird hier jedes kommerzielle Papierprodukt verstanden, bei dem ein oder mehrere Folien aus Papier oder Pappe zu einem mit Hohlräumen versehenen Körper zusammengefügt ist.

Als "kommerziell" wird hier ein Produkt verstanden, das - für verschiedenartige Anwendungen konzipiert - in großer Menge und/oder Stückzahl hergestellt wird und dadurch als preisgünstiges Halbzeug für das erfindungsgemäße Verfahren geeignet ist.

In der Literatur ist zwar ein Verfahren bekannt, in dem Wellpappekörper oder andere Papierstrukturen mit einem Schlicker aus metallischen Al/Si-Pulvern beschichtet werden und dann über eine 2-stufige Hochtemperaturbehandlung in ein SiC/Oxidkeramisches Bauteil umgesetzt werden (H. Sieber et al., "Herstellung von porösen Keramiken aus Papierstrukturen", in "Das Keramiker Jahrbuch 2002", Hrsg.: H. Reh, Göller Verlag, Baden-Baden/Deutschland, 47-54). Im Unterschied zum erfindungsgemässen Verfahren ist dabei jedoch eine Schlickerinfiltration zur Beschichtung der inneren Zellwände der Wellpappebauteile notwendig, die vor der Hochtemperaturbehandlung vorgenommen werden muss. Auch können nach dem dort beschriebenen Verfahren Körper mit geschlossenen Porositäten nicht verwendet werden, da der Schlicker nicht in geschlossene Porositäten eindringen und diese beschichten kann.

Durch die Erfindung ist es möglich, die in der Papierindustrie entwickelten vielfältigen Möglichkeiten der Papierverarbeitung und Formgebung zur Herstellung von Keramiken auszunutzen. Insbesondere können einlagige, wie auch ein- und mehrwellige Wellpappen zum Einsatz kommen. Decken- und Wellenpapiere der Wellpappen können sowohl aus Frischfaser (Holzstoff) als auch aus Altpapier hergestellt werden. Je nach Faserzusammensetzung unterscheidet man die Wellpappenrohpapiere Kraftliner, Testliner oder Schrenz als Deckenpapiere und Halbzellstoffpapier oder Wellenstoff als Wellenpapiere, die für jeweils unterschiedliche Zweckbestimmungen auch bei der Keramikherstellung einsetzbar sind. Eine Übersicht über kommerziell hergestellte Wellpappen, ihre Herstellung und Eigenschaften findet sich in der DIN 55468 sowie auf der Internet-Seite des Verbandes der deutschen Wellpappen-Industrie (http:\\www.wellpappen-industrie.de).

Ein erfindungsgemäßer, SiC enthaltender Verbundkörper ist also durch die folgenden Herstellungsschritte gekennzeichnet: Nach der Fertigung eines Vorkörpers aus Wellpappe wird dieser unter Luftabschluss oder einem sauerstoffarmen Inertgas verkokt und anschließend mit Silizium oder siliziumhaltigen Verbindungen in Kontakt gebracht. Das Silizium bzw. die siliziumhaltigen Verbindungen können dabei in fester, flüssiger oder gasförmiger Form an den verkokten Vorkörper herangeführt werden. Die auf diese Weise mit Silizium in Kontakt gebrachten Vorkörper werden in einem weiteren oder gleichzeitig erfolgenden Schritt einer Wärmebehandlung unterzogen, wodurch es zur Umsetzung von C und Si in SiC kommt. Die Wärmebehandlung kann dabei auch weitere Schritte, wie etwa Fritten oder Sintern beinhalten, um die Eigenschaften des Verbundkörpers in gewünschter Weise zu beeinflussen.

Die Umsetzung in keramische SiC-basierende Bauteile ist über eine einfache, 1- oder 2-stufige Temperbehandlung in inerter Atmosphäre möglich. Die umgesetzten keramischen Bauteile weisen die Vorteile von keramischen Materialien auf, wie z.B. Hochtemperaturbeständkeit, und können unter aggressiven Umgebungsbedingungen eingesetzt werden. Mit dem Verfahren können ebenfalls poröse Bauteile aus SiC-basierender Keramik mit geschlossen Porenstrukturen hergestellt werden.

Die Pyrolyse der Wellpappen, die bei Bedarf zur Erhöhung der Kohlenstoffdichte mit verdünnten oder unverdünnten Lösungen aus verkokbaren Stoffen (z.B. Harze, Lignin, Zuckerlösungen) infiltriert findet bei einer Temperatur zwischen etwa 600 - 1800°C in inerter, sauerstofffreier Atmosphäre statt. Um eine Zerstörung der Bauteile durch die bei der pyrolytischen Zersetzung der Cellulosefasern, bzw. der verkokbaren Stoffe, in Kohlenstoff entstehenden Gase zu verhindern, sollte bis zu einer Temperatur von ca. 400-500°C eine langsame Heizrate gewählt werden (z. B. 1-2°C/min). Ab ca. 500°C kann eine höhere Heizrate (z. B. 5°C/min) genutzt werden. Die Pyrolysetemperatur sollte für die Dauer von etwa 1h gehalten werden.

Die Silizierung der pyrolysierten Bauteile, bevorzugt in Form einer Schmelzphasensilizierung, findet unter sauerstofffreier Atmosphäre oder im Vakuum (ca. 100 Pa) statt. Gut geeignet ist eine Dochtsilizierung, bei der das pyrolysierte Bauteil auf einen porösen Kohlenstoff- oder SiC-Körper gestellt wird und das flüssige Si über den porösen Docht in das Bauteil fließt. Aufgrund der porösen Struktur aus Kohlenstoff erfolgt eine spontane Infiltration des Bauteils mit dem flüssigen Si und eine Umsetzung des Kohlenstoffs zu SiC. Nach der Silizierung bei Temperaturen zwischen etwa 1420 - 1600°C kann das Bauteil relativ einfach und ohne es zu zerstören wieder vom Docht abgetrennt werden. Geeignet sind aber auch andere Silizierungsarten, z. B. bei denen das Bauteil direkt in ein Pulverbett aus Si gestellt wird. Der Silizierung kann ein weiterer Behandlungsschritt nachfolgen, bei dem das Silizium wenigstens teilweise entfernt wird, wodurch eine Keramik mit erhöhtem SiC-Gehalt hergestellt wird.

Die zweistufige Prozessführung der Pyrolyse und Silizierung kann gegebenenfalls in einem einstufigen Prozess zusammengefasst werden. Die einstufige Prozessführung wird auch dadurch begünstigt, dass im Unterschied zur Pyrolyse von holzartigen Ausgangsmaterialien bei der Verwendung von Papierprodukten eine wesentlich geringere Belastung mit Zersetzungsprodukten während der Pyrolyse auftritt, da eine wesentlich geringere Menge an cellulosehaltigen Ausgangsmaterialien im Verhältnis zur Bauteilgröße vorhanden ist.

Die Wellpappen können auch einer Infiltration mit einer Si-enthaltenden präkeramischen Verbindung, etwa TEOS-Tetraethylorthofsilikat, Polysiloxan, Polycarbosilan oder Polysilazan, und/oder Si/SiO₂-Pulver, und anschließender Pyrolyse unterzogen werden, wobei die reaktive Umsetzung in SiC-Keramik in inerter Atmosphäre bei Temperaturen von oberhalb etwa 600°C durchgeführt wird.

Nach Ausbildung von Siliziumkarbid kann der Verbundkörper zudem durch eine Temperbehandlung an Luft bei Temperaturen oberhalb von etwa 600°C mit einer Oberflächenschicht aus SiO₂ überzogen werden.

### Beispiele

Die Bilder zeigen beispielhaft einige konkrete Anwendungen für die beschriebene Erfindung, die Erfindung ist jedoch nicht beschränkt darauf. In den Bildern gezeigt ist jeweils ein aus Wellpappe geformter Vorkörper sowie der hieraus - nach Verarbeitung gemäß dem erfindungsgemäßen Verfahren - resultierende keramische Verbundkörper.

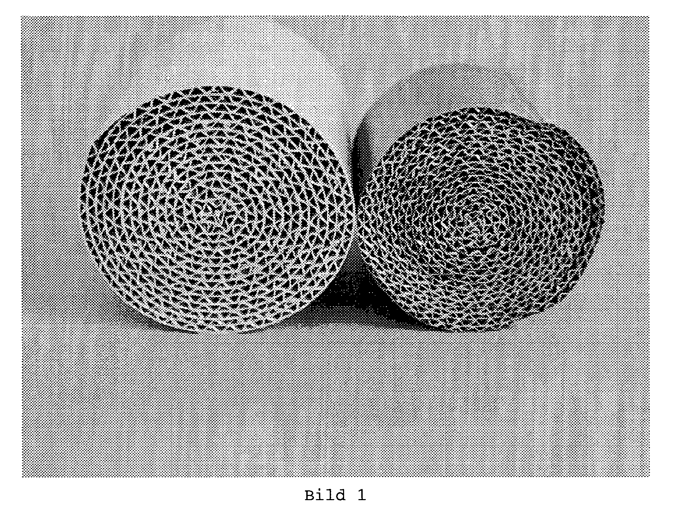

### Beispiel 1 - Bild 1 - SiSiC-Bauteil mit uniaxial gerichteter Zellenstruktur

Einseitige Wellpappen mit unterschiedlicher Wellenhöhe und Wellenbreite werden aufgerollt und zu zylindrischen Bauteilen verklebt (Bild 1, links). Es entstehen Bauteile aus Wellpappe mit gerichteten Porenstrukturen mit Zelldurchmessern zwischen 1 bis 8 mm und Zellwandstärken entsprechend der gewählten Papierstärke (ca. 200 µm). Zur Verstärkung der mechanischen Festigkeit können die gerollten Wellpappen in einen ebenfalls aus Kartonagen bestehenden Ring eingepasst werden. Die Wellpappebauteile wurden bei 800°C in N₂-Atmosphäre pyrolysiert. Dabei wurde bis zu einer Temperatur von 500°C eine langsame Heizrate von 1°C/min genutzt. Bei dieser Temperatur ist die thermische Zersetzung der Cellulosefasern zu Kohlenstoff zum Großteil abgeschlossen. Anschließend wurde mit einer Heizrate von 5°C/min auf 800°C hochgeheizt. Nach der Pyrolyse wurde ein Gewichtsverlust von 78 Gew.% bestimmt sowie eine Schwindung von ca. 20 % in axialer und radialer Richtung. Die entstandenen Kohlenstoffformen behalten die innere und äußere Form des Wellpappenbauteils bei und wurden durch eine anschließende Infiltration mit flüssigem Si bei einer Temperatur von 1500°C (Haltezeit 1h) in SiSiC-Keramiken umgesetzt. Nach der Silizierung ist eine poröse SiSiC-Keramik (Porosität ca. 60 %) entstanden, die die ursprüngliche Form des gerollten Wellpappebauteils wiederspiegelt (Bild 1, rechts).

Derartige, einfach herzustellende SiSiC-Keramiken mit uniaxial gerichteter Porosität können z.B. als Katalysator-Trägerstukturen, zum Transport von heißen Gasen, zur Aufheizung von Gasen in Solaranlagen, als Brennhilfsmittel oder als Porenbrennersubstrate verwendet werden.

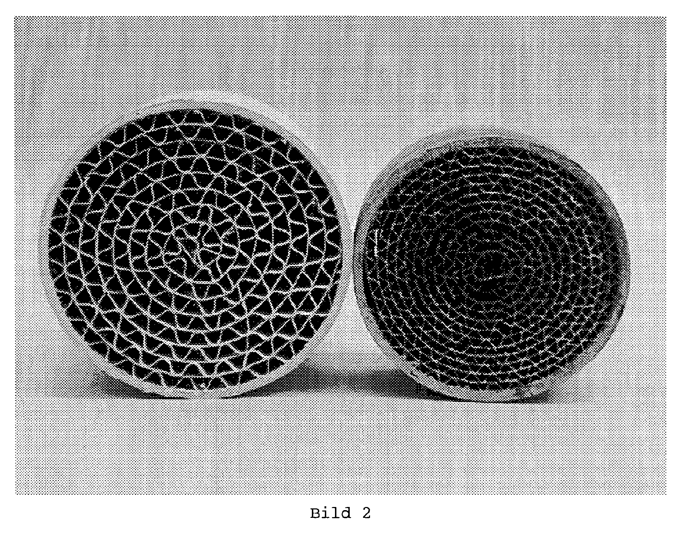

### Beispiel 2 - Bild 2 - SiSiC-Bauteil mit uniaxial gerichteter Zellenstruktur und verstärkten Zellwänden

Einseitige Wellpappen mit unterschiedlicher Wellenhöhe und Wellenbreite wurden aufgerollt und zu zylindrischen Bauteilen verklebt (Bild 2, links). Es entstehen Bauteile aus Wellpappe mit gerichteten Porenstrukturen mit Zelldurchmessern zwischen 1 bis 8 mm und Zellwandstärken entsprechend der gewählten Papierstärke (ca. 200 µm). Zur Verstärkung der mechanischen Festigkeit wurden die gerollten Wellpappebauteile in einen ebenfalls aus Kartonagen bestehenden Ring eingepasst. Vor der Pyrolyse wurden die Wellpappebauteile mit einem verkokbaren Polymer (Furanharz, unverdünnt) zur Erhöhung der Kohlenstoffdichte der Zellwände bei Raumtemperatur infiltriert. Die Polymerinfiltration führte zu einer Gewichtszunahme des Wellpappebauteils von ca. 50 Gew.%. Die Pyrolyse wurde analog Beispiel 1 durchgeführt. Nach der Silizierung bei einer Temperatur von 1500°C (Haltezeit 1h) sind ebenfalls poröse SiSiC-Keramiken entstanden, die die ursprüngliche Form der gerollten Wellpappen wiederspiegeln. Im Unterschied zu Beispiel 1 war der Durchmesser der Zellwände um ca. 50 % erhöht (Bild 2, rechts).

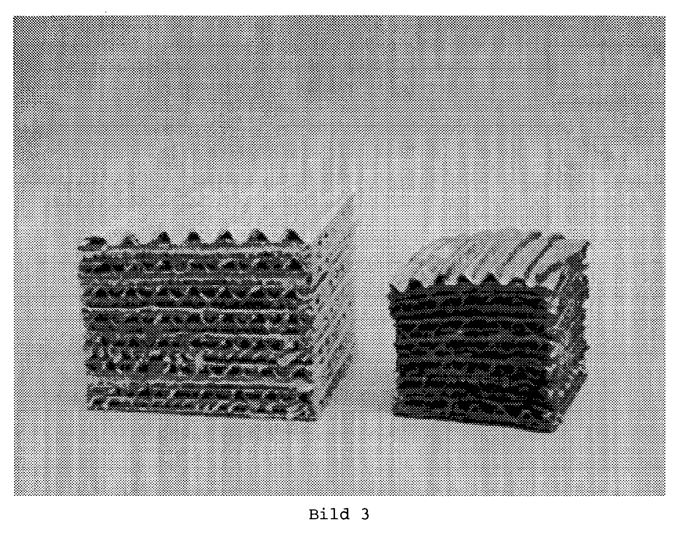

### Beispiel 3 - Bild 3 SiSiC-Bauteil mit kreuzweise uniaxial gerichteter Zellenstruktur

Einseitige oder zweiseitige Wellpappen mit unterschiedlicher Wellenhöhe und Wellenbreite werden quadratisch ausgeschnitten und jeweils mit 90° versetzt aufeinander geklebt, (Bild 3, links). Es entstehen Bauteile aus Wellpappe mit kreuzweise gerichteten Porenstrukturen mit Zelldurchmessern zwischen 1 bis 8 mm und Zellwandstärken entsprechend der gewählten Papierstärke (ca. 200 µm). Die Pyrolyse und Silizierung wurde analog Beispiel 1 durchgeführt. Nach der Silizierung sind hochporöse SiSiC-Keramiken entstanden, die die ursprüngliche Form der kreuzweise verklebten Wellpappen wiederspiegeln (Bild 3, rechts).

Derartige, einfach herzustellende SiSiC- oder SiC (nach zusätzlichen Behandlung zur Entfernung des Si) Keramiken mit kreuzweise uniaxial gerichteter Zellenstrukturen können z.B. als Wärmetauscherstukturen bei hohen Temperaturen oder als Brennhilfsmittel verwendet werden.

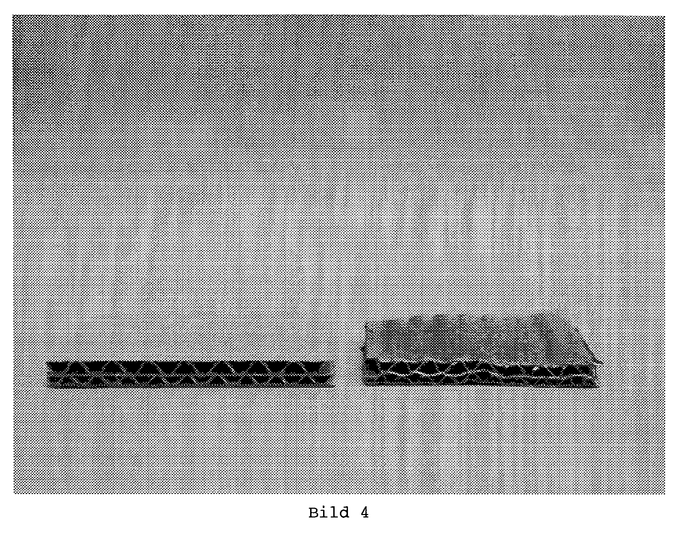

### Beispiel 4 - Bild 4 - SiSiC-Bauteil mit beidseitig ebenen Flächen

Zweiseitige Wellpappen mit unterschiedlicher Wellenhöhe und Wellenbreite werden zu flachen Bauteilen geschnitten (Bild 4, links). Es entstehen Bauteile aus Wellpappe mit gerichteten Porenstrukturen mit Zelldurchmessern zwischen 1 bis 8 mm und Zellwandstärken entsprechend der gewählten Papierstärke (ca. 200 µm). Zur Verstärkung der Festigkeit können die Wellpappestrukturen an der Ober- und Unterseite mit dickeren, ebenen Kartonagen versehen werden. Die Pyrolyse und Silizierung wurde analog Beispiel 1 durchgeführt. Nach der Silizierung sind planare, leichtgewichtige SiSiC-Keramiken entstanden, die die ursprüngliche Form der Wellpappestrukturen wiederspiegeln (Bild 4, rechts).

Derartige, einfach herzustellenden und leichtgewichtige SiSiC-Keramiken können z.B. als hochtemperaturstabile Substrate für z. B. Solarzellen, als Isolationsmaterialien für hohe Temperaturen, als Brandschutzstrukturen oder als Brennhilfsmittel verwendet werden.

## Patentansprüche

1. Verfahren zur Herstellung eines Verbundkörpers aus Keramik, bei dem ein kohlenstoffhaltiger und Hohlräume aufweisender Formkörper gebildet, anschließend einer Pyrolyse sowie einer Silizierung unterzogen und bis zur Ausbildung von Siliziumcarbid gebrannt wird,
**dadurch gekennzeichnet,**
**dass** als Ausgangsmaterial zur Herstellung des Formkörper Wellpappe zum Einsatz kommt.

2. Verfahren nach Anspruch 1,
**dadurch gekennzeichnet,**
**dass** der Formkörper vor der Pyrolyse und der Silizierung zur Erhöhung der Kohlenstoffdichte mittels verdünnten oder unverdünnten Lösungen aus verkokbaren Stoffen, wie Harze, Lignin oder Zuckerlösungen infiltriert wird.

3. Verfahren nach Ansprch 1 oder 2,
**dadurch gekennzeichnet,**
**dass** die nach der Silizierung entstandene Keramik einer Behandlung zur wenigstens teilweisen Entfernung des Siliziums unterzogen wird.

4. Verfahren nach einem der vorhergehenden Ansprüche,
**dadurch gekennzeichnet,**
**dass** der Formkörper vor der Pyrolyse einer Infiltration mit einer Si-enthaltenden präkeramischen Verbindung, etwa TEOS-Tetraethylorthofsilikat, Polysiloxan, Polycarbosilan oder Polysilazan, und/oder Si/SiO₂-Pulver, unterzogen wird.

5. Verfahren nach einem der vorhergehenden Ansprüche,
**dadurch gekennzeichnet,**
**dass** nach der Ausbildung von Siliziumkarbid der Verbundkörper durch eine Temperbehandlung an Luft bei Temperaturen oberhalb von etwa 600°C mit einer Oberflächenschicht aus SiO₂ überzogen wird.

6. Verwendung von Wellpappe als Ausgangswerkstoff zur Herstellung von Siliziumkarbid-haltigen Verbundwerkstoffen, die über eine Infiltration eines verkokten Vorkörpers mit Silizium oder siliziumhaltigen Verbindungen hergestellt werden.

7. Siliziumkarbid enthaltender Verbundkörper, hergestellt durch folgende Verfahrensschritte:
- Herstellung eines Vorkörpers einer gewünschten Geometrie durch Zuschnitt und Formung von Wellpappe,
- Verkokung des Vorkörpers unter Luftabschluss oder Inertgas,
- Kontaktierung des verkokten Vorkörpers mit Silizium oder siliziumhaltigen Verbindungen,
- Wärmebehandeln des silizierten Vorkörpers unter Ausbildung eines Verbundkörpers mit zumindest abschnittsweise durchströmbarer Struktur.
